(19) **Europäisches Patentamt / European Patent Office / Office européen des brevets**

(11) **EP 4 642 043 A1**

(12) **EUROPEAN PATENT APPLICATION**
published in accordance with Art. 153(4) EPC

(43) Date of publication:
29.10.2025 Bulletin 2025/44

(21) Application number: 23907577.3

(22) Date of filing: 13.12.2023

(51) International Patent Classification (IPC):
$H04N\ 23/68$ (2023.01)  $G03B\ 5/00$ (2021.01)
$H04N\ 23/54$ (2023.01)  $G03B\ 3/10$ (2021.01)
$G03B\ 13/36$ (2021.01)

(52) Cooperative Patent Classification (CPC):
G03B 3/10; G03B 5/00; G03B 13/36; H04N 23/54;
H04N 23/68

(86) International application number:
PCT/KR2023/020592

(87) International publication number:
WO 2024/136291 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.12.2022 KR 20220178791
02.02.2023 KR 20230014503
15.02.2023 KR 20230020354

(71) Applicant: LG INNOTEK CO. LTD
Gangseo-gu
Seoul 07796 (KR)

(72) Inventors:
• KIM, Min
Seoul 07796 (KR)
• MOON, Young Seop
Seoul 07796 (KR)
• KANG, Joo Won
Seoul 07796 (KR)

(74) Representative: Plasseraud IP
104 Rue de Richelieu
CS92104
75080 Paris Cedex 02 (FR)

(54) **LIGHT-EMITTING DEVICE DRIVING MODULE AND CAMERA MODULE**

(57) A light-emitting device driving module according to an embodiment of the present disclosure comprises: a first switching device which connects a light-emitting device to a driving power source; a second switching device which connects the light-emitting device to a ground; a third switching device which connects the light-emitting device to a storage capacitor; and a controller which controls operations of the first to third switching devices, wherein charging of the light-emitting device is conducted by the driving power source and the storage capacitor and discharging of the light-emitting device is conducted by the ground and the storage capacitor.

【FIG 3】

EP 4 642 043 A1

# Description

[Technical Field]

The present disclosure relates to a light-emitting device driving module and a camera module.

[Background Art]

A VCSEL (Vertical Cavity Surface Emitting Laser) is a type of semiconductor laser device that emits laser in a vertical direction from the surface of a semiconductor wafer in the field of optical communications. Recently, interest in VCSEL technology has been increasing due to miniaturization, high integration rate, low power consumption, simple manufacturing process, and heat resistance. In addition, it is easy to connect to a photoreceptor or optical fiber, and since a two-dimensional arrangement is easy, parallel signal processing is possible, and it can be integrated with digital and analog circuits using existing semiconductor processes, the fields of technological application are continuously expanding.

The VCSEL driving device for driving these VCSELs must be able to stably supply a bias current signal and generate a modulation current signal at a high operating frequency so as to efficiently provide a stable bandwidth and high gain at the optical transmitter end. Existing laser driving devices use BJT (Bipolar Junction Transistor) process or SiGe or BiCMOS process technology. However, recently, in order to achieve low power and low production cost, there is a need to develop VCSEL driving devices based on pure CMOS technology that can achieve high productivity and high integration.

As digital cameras, such as digital still cameras and digital video cameras, become more widespread, consumers' desire to photograph high-quality photos and videos is increasing.

In the case of cameras photographing video and still images, there are many cases where unstable, shaking images are photographed due to external factors of the camera, such as hand shake or external vibrations from vehicle mounting.

To prevent the resolution of photos from deteriorating due to external vibrations or shaking of the digital photographing device, such as the user's shaking hands, recently, the number of cameras that incorporate shake compensation devices is increasing.

[Disclosure]

[Technical Problem]

The technical problem to be solved by the present disclosure is to provide a light-emitting device driving module and a camera module that compensates for moving tilt afterwards.

[Technical Solution]

In order to solve the technical problem, a light-emitting device driving module includes a first switching device connecting a light-emitting device and a driving power source; a second switching device connecting the light-emitting device and a ground; a third switching device connecting the light-emitting device and a storage capacitor; and a controller controlling the operation of the first to third switching devices, in which the light-emitting device may be charged by the driving power source and the storage capacitor, and discharged by the ground and the storage capacitor.

The light-emitting device driving module may further include an inductor arranged between the light-emitting device and the third switching device.

The light-emitting device driving module may further include a fourth switching device connecting the light-emitting device and the storage capacitor and connected in parallel with the third switching device.

The controller, when the light-emitting device is operated for emitting light, may turn the third switching device on and off before the first switching device is turned on, and turn the third switching device on and off after the first switching device is turned off.

The light-emitting device may operate to emit light if a second voltage or higher is applied thereto, and the controller may turn on the third switching device until the first voltage is applied to the light-emitting device during the initial operation for emitting light, and the second voltage may be greater than the first voltage.

The controller may turn the first switching device off to extinguish the light-emitting device and then turn the third switching device on.

The controller, during the initial operation for emitting light of the light-emitting device, may turn the third switching device on for a first time, turns the first switching device on for a second time after the first time, turn the third switching device on for a third time after the second time, and turn the second switching device on after the third time.

The light-emitting device may include a plurality of light-emitting devices, and the controller may increase the first time for turning the third switching device on as the number of the plurality of light-emitting devices increases.

The light-emitting device may include a parasitic capacitor, and the capacity of the storage capacitor may be 10 times or more the capacity of the parasitic capacitor.

A light-emitting device driving module includes a first switching device connecting a light-emitting device and a driving power source; a second switching device connecting the light-emitting device and a ground; a third switching device connecting the light-emitting device and a storage capacitor; and a controller controlling the operation of the first to third switching devices, in which the controller may turn the third switching device on before turning the first switching device on to charge the energy of the storage capacitor to the light-emitting device.

The light-emitting device includes a plurality of light-emitting devices, and the controller can increase the time for turning on the third switching device as the number of the plurality of light-emitting devices increases.

The controller can charge the energy of the light-emitting device into the storage capacitor by turning on the third switching device after the off operation of the first switching device.

The controller can discharge the energy of the light-emitting device to the ground by turning on the second switching device after the off operation of the third switching device.

An inductor may be included between the light-emitting device and the third switching device.

The light-emitting device includes a parasitic capacitor, and the capacity of the storage capacitor can be at least 10 times the capacity of the parasitic capacitor.

In order to solve the technical problem, a camera module according to an embodiment of the present disclosure includes: an image sensor; a first drive actuator disposed on the image sensor for driving OIS; a drive part applying a drive signal to the first drive actuator; and a controller generating a drive signal for driving the first drive actuator to correct a moving tilt that occurs when at least one of zoom driving and AF driving is driven, in which the controller may store a sensitivity, which is a pixel movement amount on the image sensor according to a driving amount of the first drive actuator, and the controller can generate the drive signal applied to the first drive actuator using the pixel movement amount and the sensitivity.

The sensitivity includes a first sensitivity, which is a pixel movement amount on the image sensor according to a driving amount in a first-axis direction perpendicular to the optical axis direction of the first driving actuator, and a second sensitivity, which is a pixel movement amount on the image sensor according to a driving amount in a second-axis direction perpendicular to the optical axis direction of the first driving actuator, and the first-axis direction and the second-axis direction can be perpendicular.

The camera module may include a second driving actuator for zoom driving, and the controller can store the amount of pixel movement on the image sensor due to the moving tilt that occurs during the zoom driving.

The camera module may include a third driving actuator for AF driving, and the controller can store the amount of pixel movement on the image sensor due to the moving tilt that occurs during the AF driving.

The camera module may include a second driving actuator for zoom driving; and a third driving actuator for AF driving, and the controller can simultaneously store the amount of pixel movement on the image sensor due to the moving tilt occurring during the zoom driving and the AF driving.

In order to solve the technical problem, according to another embodiment of the present disclosure, a camera module includes: an image sensor; a first drive actuator disposed on the image sensor for OIS driving; a second drive actuator for zoom driving; a third drive actuator for AF driving; a drive part applying a drive signal to the first to third drive actuators; and a controller generating a first drive signal for driving the first drive actuator to correct a moving tilt occurring during driving of at least one of the zoom driving and the AF driving, in which the controller can store a sensitivity, which is a pixel movement amount on the image sensor according to a driving amount of the first drive actuator, and the controller can generate the drive signal applied to the first drive actuator using the pixel movement amount and the sensitivity.

The controller may store the amount of pixel movement on the image sensor according to the second driving signal applied to the second driving actuator and the amount of pixel movement on the image sensor according to the third driving signal applied to the third driving actuator.

The above controller can generate the first driving signal according to the second driving signal and the third driving signal.

The sensitivity includes a first sensitivity, which is a pixel movement amount on the image sensor according to a driving amount in a first-axis direction perpendicular to the optical axis direction of the first driving actuator, and a second sensitivity, which is a pixel movement amount on the image sensor according to a driving amount in a second-axis direction perpendicular to the optical axis direction of the first driving actuator, and the first-axis direction and the second-axis direction may be perpendicular.

The first sensitivity and the second sensitivity may have different slopes.

In order to solve the technical problem, a camera module according to an embodiment of the present disclosure includes a housing and a bobbin arranged in the housing, an actuator for driving the bobbin; a position sensor for sensing a position of the bobbin; a driving part for applying a driving signal to the actuator; and a controller for generating the driving signal through a position sensed by the position sensor, in which the controller may stepwise increase or decrease the level of the second driving signal when a second driving signal is applied according to a second sensing period after a first driving signal is applied according to a first sensing period.

The number of steps of the level of the second driving signal applied during the second sensing period may vary according to the difference between the level of the first driving signal and the level of the second driving signal.

The controller increases or decreases the step of the level of the second driving signal applied during the second sensing period in N steps when the absolute value of the level difference between the first driving signal and the second driving signal is a first value, and the controller increases or decreases the step of the level of the second driving signal applied during the second sensing period in M steps when the absolute value of the level difference between the first driving signal and the second driving signal is a second value, and when the first value is greater than the second value, N may be greater than M.

The controller increases or decreases the driving signal to a step having a level difference of X when the absolute value of the level difference between the first driving signal and the second driving signal is a first value, and the controller increases or decreases the driving signal to a step having a level difference of Y when the absolute value of the level difference between the first driving signal and the second driving signal is a second value, and when the first value is greater than the second value, X may be greater than Y.

In order to solve the above technical problem, a camera module according to an embodiment of the present disclosure includes: a housing; a bobbin disposed within the housing; a ball disposed between the bobbin and the housing; a magnet disposed on the bobbin; a coil disposed to face the magnet; a position sensor disposed to face the magnet; a driving part applying a driving signal to the coil; and a controller generating the driving signal through a position sensed by the position sensor, in which the controller can stepwise increase or decrease the level of the second driving signal when a second driving signal is applied according to a second sensing period after a first driving signal is applied according to a first sensing period.

The second sensing cycle may be temporally continuous with respect to the first sensing cycle.

The first sensing period and the second sensing period may have the same time interval.

During the first sensing period, the first driving signal applied to the coil may not be changed, and during the second sensing period, the driving signal applied to the coil may be changed at least twice.

[Advantageous Effect]

According to the present embodiments, energy remaining after use for light emission in a light-emitting device is stored in a capacitor without being discharged, and the energy stored in the capacitor is used as a bias voltage when light emission is performed again, so that energy consumption can be reduced and this is advantageous in terms of efficient energy management.

In addition, since the size of the energy charged in the capacitor can be controlled by utilizing LC resonance, high-speed light emitting driving is possible even if the number of light emitting devices increases.

In addition, even if the number of light-emitting devices changes and the magnitude of the bias voltage required for light emission changes, the required amount of bias voltage for the light-emitting devices can be applied through switching time control. Therefore, there is no need to change the design of the light-emitting device driving module every time the number of light-emitting devices changes.

According to the present embodiments, moving tilt caused by a long stroke during zoom driving or AF driving can be improved.

Additionally, by pre-calibrating the zoom drive actuator, AF drive actuator, and OIS driving actuator with different dimensional systems based on the image sensor, the moving tilt can be improved more immediately.

According to the present embodiments, noise generated during operation of a ball type actuator can be reduced through fine control.

In addition, the driving control of the actuator can be optimized by fluidly changing the number of steps and the signal size of each step according to the size of the driving signal applied to the actuator.

[Description of Drawings]

FIG. 1 is a circuit diagram illustrating light-emitting device driving module.

FIG. 2 is a view for explaining the operation of the light-emitting device driving module.

FIG. 3 is a block diagram illustrating a light-emitting device driving module according to the present embodiment.

FIG. 4 and FIG. 5 are circuit diagrams illustrating a light-emitting device driving module according to the present embodiment.

FIG. 6 is a view for explaining the operation of a light-emitting device driving module according to the present embodiment.

FIG. 7 is a circuit diagram illustrating a light emitting device driving module according to another embodiment of the present disclosure.

FIG. 8 is a view for explaining the operation in which a resonance phenomenon occurs when energy is charged from a storage capacitor to a light-emitting device according to the present embodiment.

FIG. 9 and FIG. 10 are circuit diagrams illustrating a light-emitting device driving module according to another embodiment of the present disclosure.

FIG. 11 is a block diagram illustrating a camera module according to the present embodiment.

FIG. 12 is a block diagram illustrating a camera module according to another embodiment of the present disclosure.

FIG. 13 is a sensitivity graph stored in the controller of the camera module according to the present embodiment.

FIG. 14 is a view for explaining the moving tilt compensation operation of the camera module according to the present embodiment.

FIG. 15 is an exploded perspective view illustrating a lens driving device according to an embodiment of the present disclosure.

FIG. 16 is an exploded perspective view illustrating a lens driving device according to another embodiment of the present disclosure.

FIG. 17 is an exploded perspective view of a lens driving device according to another embodiment of the present disclosure.

FIG. 18 and FIG. 19 are views for explaining closed-loop control of the camera module.

FIG. 20 is a block diagram illustrating a camera module according to an embodiment of the present disclosure.

FIG. 21 and FIG. 22 are views for explaining the control operation of a camera module according to an embodiment of the present disclosure.

[Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components among the embodiments can be selectively combined or substituted for use.

In addition, terms (including technical and scientific terms) used in the present embodiment can be interpreted as having a meaning that can be generally understood by a person having ordinary skill in the technical field to which the present embodiment belongs, unless explicitly and specifically defined and described, and terms that are commonly used, such as terms defined in a dictionary, can have their meanings interpreted in consideration of the contextual meaning of the relevant technology.

Additionally, the terms used in the present embodiments are for the purpose of describing the embodiments and are not intended to limit the present disclosure.

In this specification, the singular may also include the plural unless specifically stated otherwise in the phrase, and when it is described as "at least one (one or more) of A, B, C", it may include one or more of all combinations that can be combined with A, B, C.

In addition, in describing components of the present embodiment, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'accessed' to another component, it may include not only cases where the component is 'connected', 'coupled', or 'accessed' directly to the other component, but also cases where the component is 'connected', 'coupled', or 'accessed' by another component between the component and the other component.

In addition, when described as being formed or arranged "above" or "below" each component, "above" or "below" includes not only the case where the two components are in direct contact with each other, but also the case where one or more other components are formed or arranged between the two components. In addition, when expressed as "above" or "below", the meaning of the downward direction as well as the upward direction based on one component may be included.

The 'optical axis direction' used below is defined as the optical axis direction of the lens and/or image sensor coupled to the lens driving device.

The 'vertical direction' used below may be a direction parallel to or the same as the optical axis direction. The vertical direction may correspond to the 'z-axis direction'. The 'horizontal direction' used below may be a direction perpendicular to the vertical direction. In other words, the horizontal direction may be a direction perpendicular to the optical axis. Therefore, the horizontal direction may include the 'x-axis direction' and the 'y-axis direction'.

The 'auto focus (AF) function' used below is defined as a function that automatically focuses on a subject by adjusting the distance from the image sensor by moving the lens in the optical axis direction according to the distance of the subject so that a clear image of the subject can be obtained on the image sensor. In addition, 'auto focus feedback(CLAF, closed-loop auto focus) control' is defined as detecting the distance between the image sensor and the lens and controlling the position of the lens through feedback in real time in order to improve the accuracy of focus adjustment.

The 'hand shake correction(optical image stabilization (OIS) function' used below is defined as a function that moves or tilts the lens in a direction perpendicular to the optical axis to offset hand shake in order to prevent an image or image from shaking due to the user's hand shake. In addition, 'hand shake correction feedback control' is defined as detecting the position of the lens with respect to the image sensor and controlling the position of the lens in real time through feedback in order to improve the accuracy of hand shake correction.

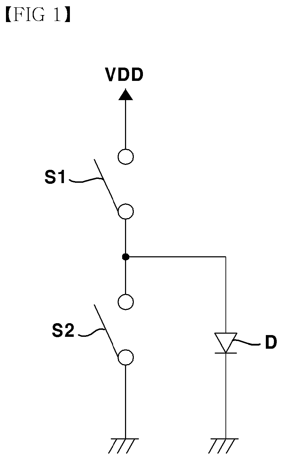

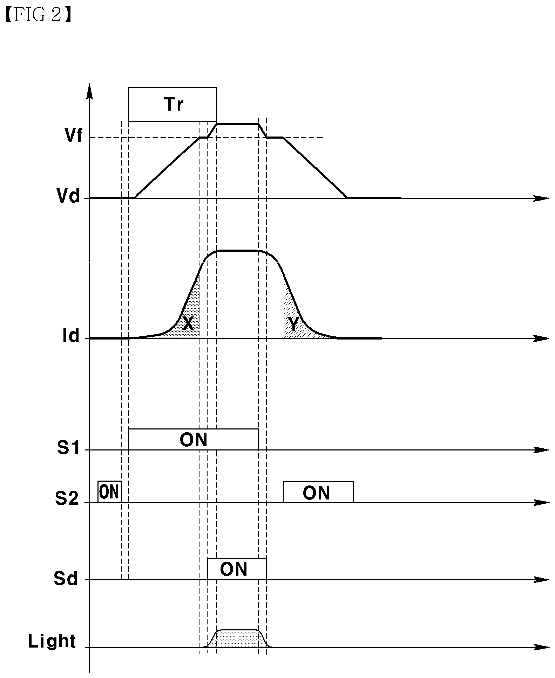

FIG. 1 is a circuit diagram illustrating light-emitting device driving module, and FIG. 2 is a view for explaining the operation of the light-emitting device driving module.

A VCSEL (Vertical Cavity Surface Emitting Laser), a type of light-emitting device, is a type of semiconductor laser device that emits laser in a vertical direction from the surface of a semiconductor wafer in the field of optical communications. The light-emitting device can be an LED (Light Emitting Diode).

A circuit for driving a light-emitting device may include a first switching device S1 that controls the application of driving power and a second switching device S2 that controls the ground connection. Referring to FIG. 2, the light-emitting device can emit light when a voltage equal to or higher than the Vf value is applied, and can be extinguished when a voltage equal to or lower than the Vf value is applied. This can be viewed as including a switch Sd in the light-emitting device that turns on when a voltage applied to the light-emitting device is equal to or higher than the Vf value and turns off when it is equal to or lower than the Vf value.

When the light-emitting device is initially driven to emit light, the first switching device S1 is turned on to boost the voltage applied to the light-emitting device. At this time, a rising time Tr (rising time), which is the time from the time the first switching device S1 is turned on to the time when the light-emitting device emits light, is required. As the rising time increases, the period in which the light-emitting device does not emit light increases even when the driving power is applied, which causes a problem in that energy X is unnecessarily consumed.

Thereafter, when the first switching device S1 is turned off and the voltage applied to the light-emitting device becomes equal to or lower than Vf, the light-emitting device is turned off. After the first switching device S1 is extinguished and a dead time passes, the second switching device S2 is turned on to discharge the energy Y remaining in the light-emitting device to ground. In other words, the energy Y remaining in the light-emitting device is not used for light emission and is wasted, so there is a problem in terms of efficient energy management.

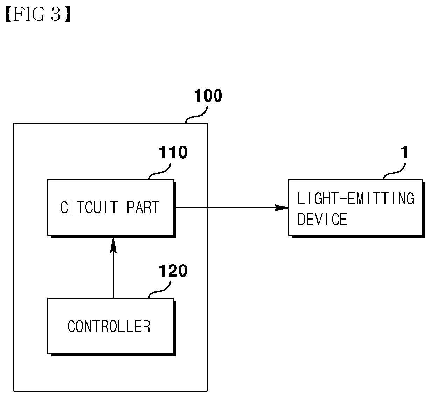

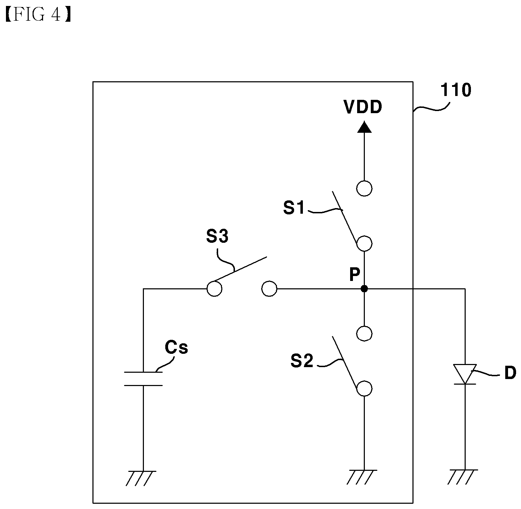

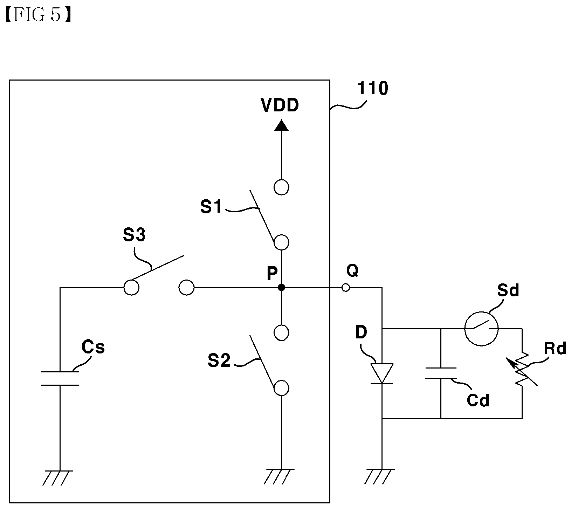

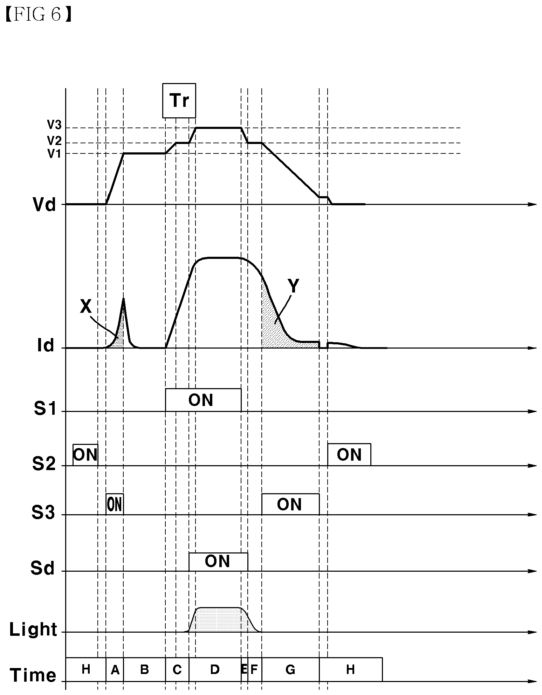

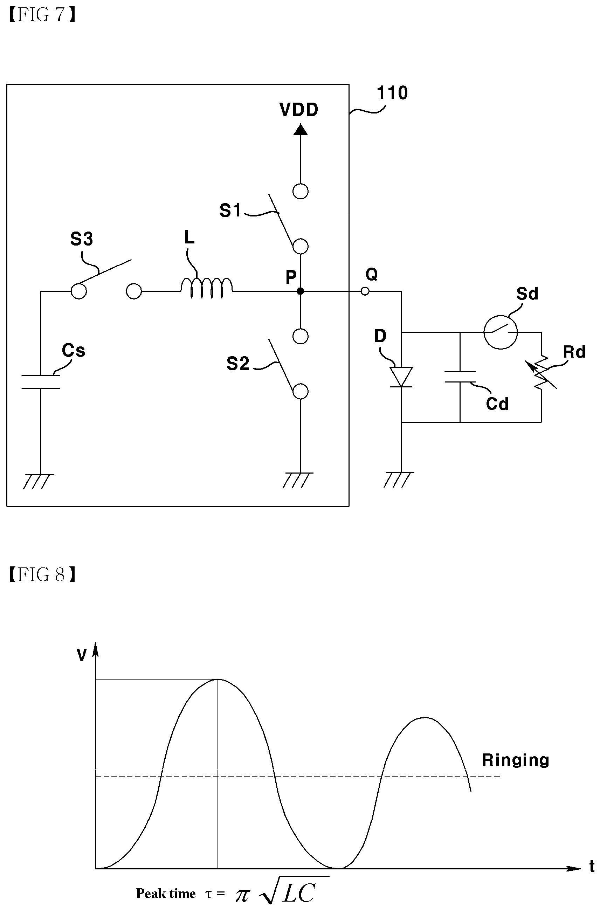

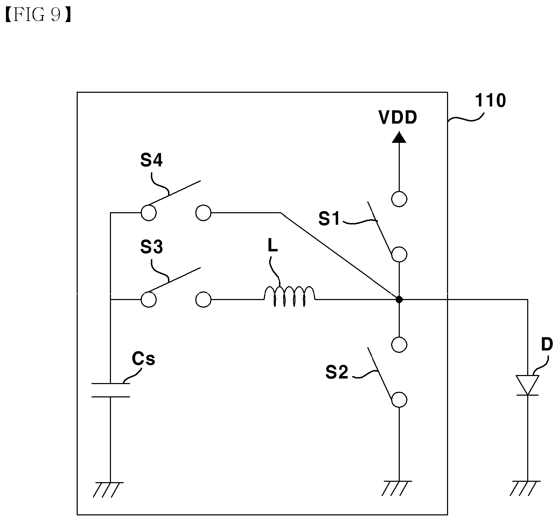

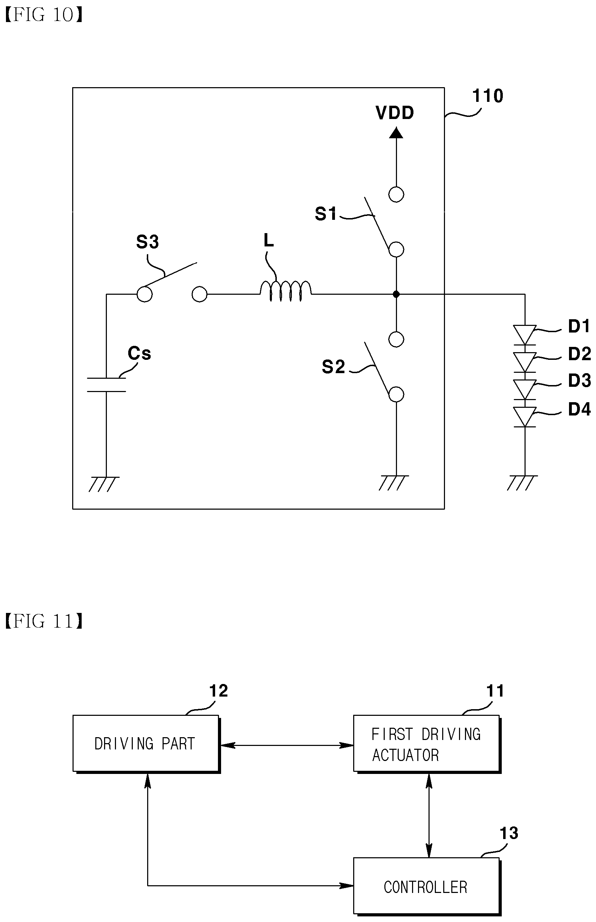

FIG. 3 is a block diagram illustrating a light-emitting device driving module according to the present embodiment, FIG. 4 and FIG. 5 are circuit diagrams illustrating a light-emitting device driving module according to the present embodiment, FIG. 6 is a view for explaining the operation of a light-emitting device driving module according to the present embodiment, FIG. 7 is a circuit diagram illustrating a light emitting device driving module according to another embodiment of the present disclosure, FIG. 8 is a view for explaining the operation in which a resonance phenomenon occurs when energy is charged from a storage capacitor to a light-emitting device according to the present embodiment, and FIG. 9 and FIG. 10 are circuit diagrams illustrating a light-emitting device driving module according to another embodiment of the present disclosure.

The light-emitting device driving module 100 according to the present embodiment may include a circuit part 110 connected to the light-emitting device 1 and a controller 120 that controls the circuit part 110. The controller 120 may control the circuit part 110 to control the light emission and extinguishment of the light-emitting device D. The light-emitting device driving module 100 may be referred to as a light-emitting device driving driver or a light-emitting device driving IC.

One end of the light-emitting device D may be connected to a circuit part 110, and the other end thereof may be connected to ground. For example, the light-emitting device D may be a VCSEL (Vertical Cavity Surface Emitting Laser) or an LED (Light Emitting Diode).

The light-emitting device D may include a parasitic capacitor Cd and an internal resistor Rd inside. Referring to FIG. 5, the parasitic capacitor Cd and the internal resistor Rd are connected in parallel to the light-emitting device D, and the parasitic switch Sd is connected in series, but this is illustrated for convenience of explanation, and in reality, it may be a configuration included inside the light-emitting device D.

The circuit part 110 may include a first switching device S1 connecting a light-emitting device D and a driving power source VDD, a second switching device S2 connecting the light-emitting device D and ground, and a third switching device S3 connecting the light-emitting device D and a storage capacitor Cs. The first to third switching devices S1, S2, S3 may be any one of a switch, a relay, and a MOSFEF.

A resistor may be connected to each of the first to third switching devices S1, S2, S3. The resistor connected to the switching device may be connected for the purpose of preventing a short circuit. The resistor connected to the switching device has a large resistance value and can prevent overcurrent, and may have a value of, for example, 1 kΩ to 10 kΩ.

The controller 120 can control the operation of the first to third switching devices S1, S2, S3. The controller 120 can control the first to third switching devices S1, S2, S3 to operate on or off. Here, the on operation means a short, in which the switch is connected and current flows through the circuit, and the off operation means an open, in which the switch is not connected and current does not flow through the circuit.

Referring to Fig. 6, the light-emitting device D can emit light when a voltage equal to or higher than the second voltage V2 is applied, and can be extinguished when a voltage equal to or lower than the second voltage V2 is applied. This means that the light-emitting device includes a parasitic switch Sd that turns on when the applied voltage is equal to or higher than the second voltage V2, and turns off when the voltage is equal to or lower than the second voltage V2. In other words, the parasitic switch Sd can automatically turn on when the potential of the light-emitting device D is equal to or higher than the second voltage V2, and can automatically turn off when the potential of the light-emitting device D is equal to or lower than the second voltage V2.

Referring to Fig. 6, the light emitting and extinguishing operations of the light emitting device D can be implemented in an operation mode consisting of sections A to H.

In section A, the third switching device S3 may be turned on so that the energy X stored in the storage capacitor Cs may be charged to the light-emitting device D. Through the on operation of the third switching device S3, the energy X stored in the storage capacitor Cs may be charged to the parasitic capacitor Cd of the light-emitting device D. At this time, the third switching device S3 may be turned on until the potential of the light-emitting device D becomes the first voltage V1. The energy actually stored in the storage capacitor Cs may be greater than the energy X charged to the light-emitting device D by the on operation of the third switching device S3. As the time for which the third switching device S3 is turned on increases, the energy X charged from the storage capacitor Cs to the light-emitting device D may increase. The first voltage V1 applied to the light emitting device D can act as a bias voltage.

The capacity of the storage capacitor Cs can be 10 times or more than the capacity of the parasitic capacitor Cd of the light-emitting device D. When the energy charged in the storage capacitor Cs is greater than the energy charged in the parasitic capacitor Cd, the energy charged in the storage capacitor Cs can be charged to the parasitic capacitor Cd. Conversely, when the energy charged in the parasitic capacitor Cd is greater than the energy charged in the storage capacitor Cs, the energy charged in the parasitic capacitor Cd can be charged to the storage capacitor Cs. When the energy remaining in the parasitic capacitor Cd after the light-emitting device D emits light in the section G described below is charged to the storage capacitor Cs, since the capacity of the storage capacitor Cs is sufficiently greater than the capacity of the parasitic capacitor Cd of the light-emitting device D, from the standpoint of the parasitic capacitor Cd, energy can be charged to the storage capacitor Cs as if it were connected to ground.

The B section may be a section before the third switching device S3 is turned off and the first switching device S1 is turned on. After the B section, in the C section, the first switching device S1 is turned on and the driving power VDD is applied. According to the time for which the first switching device S1 is turned on, the voltage applied to the light-emitting device D may increase from the first voltage V1 to the third voltage V3. According to the time for which the first switching device S1 is turned on, the voltage applied to the light-emitting device D may increase linearly. In section C, when the voltage applied to the light-emitting device D increases from the first voltage V1 to the third voltage V3, and reaches the second voltage V2 at which the parasitic switch Sd turns on, some of the energy is used to turn the parasitic switch Sd on, so a temporary section in which the voltage does not increase may occur.

The rise time Tr, which is the time from the time when the driving power VDD is applied to the light-emitting device D until the light-emitting device D emits light, may be the time for the voltage to be increased from the first voltage V1 to the second voltage V2. The conventional rise time Tr is the time for the voltage applied to the light-emitting device D to be increased from 0 V to the second voltage V2, but according to the present embodiment, since the energy already stored in the storage capacitor Cs in section A is charged to the light-emitting device D and the voltage is increased to the first voltage V1, the rise time Tr can be shortened. Through this, the light-emitting device D can emit light at a high speed based on the time when the driving power VDD is applied, and the energy consumption can be reduced. In other words, the light-emitting device D can emit light at a high speed based on the time when the first switching device S1 is turned on.

In the D section, when the voltage applied to the light-emitting device D is equal to or higher than the second voltage V2, the light-emitting device D can emit light through the on operation of the parasitic switch Sd. The light-emitting brightness of the light-emitting device D can gradually increase as the applied voltage increases, and can gradually decrease as the applied voltage decreases. The rated voltage that can be applied to the light-emitting device D can be the third voltage V3. The light-emitting device D can emit light at maximum brightness at the third voltage V3.

In section E, the first switching device S1 is turned off, and the voltage applied to the light-emitting device D can decrease. In this section, the voltage applied to the light-emitting device D gradually decreases from the third voltage V3, which is the maximum voltage, but is greater than the second voltage V2, so that the parasitic switch Sd can maintain the on operation. In other words, in section E, even if the first switching device S1 is turned off, the parasitic switch Sd can maintain the on operation, and the light-emitting device D can emit light with a brightness lower than the maximum brightness, but can be gradually extinguished.

In the F section, since the voltage applied to the light-emitting device D becomes lower than the second voltage V2, the parasitic switch Sd is turned off. Since some energy is also used for the off operation of the parasitic switch Sd, a temporary section in which the voltage applied to the light-emitting device D does not decrease may occur. Since the E section and the F section are sections in which the on or off operations of the first switching device S1 and the third switching device S3 intersect, they may be dead time sections in which both switches are turned off so that neither of the two switches is turned on. Since the F section is a section in which the on or off operations of the parasitic switch Sd and the third switching device S3 intersect, they may be dead time sections in which both switches are turned off so that neither of the two switches is turned on.

In section G, the third switching device S3 can be turned on to connect the light-emitting device D and the storage capacitor Cs. Through the on operation of the third switching device S3, the light-emitting device D emits light, and the remaining energy Y can be charged into the storage capacitor Cs. Through the on operation of the third switching device S3, the energy Y remaining in the parasitic capacitor Cd after the light-emitting device D emits light can be charged into the storage capacitor Cs. The energy Y charged from the parasitic capacitor Cd to the storage capacitor Cs can be used as energy to charge the parasitic capacitor Cd in section A, which performs the light-emitting operation later.

In the H section, the second switching device S2 can be turned on to connect the light-emitting device D and the ground. Although not illustrated, a dead time section may be included between the G section and the H section because this is a section where the on or off operations of the second switching device S2 and the third switching device S3 intersect. In this dead time section, an inrush current generated by the on operation of the second switching device S2 may occur.

Looking at the entire operation of the A to H sections, which are the light-emitting and extinguishing operations of the light-emitting device D, before the on operation of the first switching device S1 for connecting the driving power VDD to the light-emitting device D, the energy stored in the storage capacitor Cs can be charged to the light-emitting device D by turning the third switching device S3 on and off. Through this, the first voltage V1, which is a bias voltage, can be applied to the light-emitting device D. The first voltage V1 may be a lower value than the second voltage V2 required for the light-emitting device D to emit light. Thereafter, after the on operation of the first switching device S1, the third switching device S3 is turned on and off, so that the energy remaining in the light-emitting device D after emission can be charged to the storage capacitor Cs.

The controller 120 may turn on the third switching device S3 for a first time period during the initial operation for emitting light of the light-emitting device D, turn on the first switching device S1 for a second time period after the first time period, turn on the third switching device S3 for a third time period after the second time period, and turn on the second switching device S2 for the third time period after the third time period. Here, the first time period may refer to a time period for applying a first voltage V1 lower than the second voltage V2 to the light-emitting device D. The second time period may be a time period for emitting light of the light-emitting device D. The third time period may be a time period for charging the remaining energy of the light-emitting device D after emitting light into the storage capacitor Cs.

Referring to FIG. 7, the circuit part 110 may further include an inductor L arranged between the light-emitting device D and the third switching device S3. Through this, when the energy stored in the storage capacitor Cs is charged to the light-emitting device D, the energy can be amplified and charged through the resonance phenomenon of the inductor L and the storage capacitor Cs. Referring to FIG. 8, since the peak time amplified to the maximum voltage when resonance occurs is calculated as $T = \pi\sqrt{LC}$, the time for the third switching device S3 to be turned on can be adjusted by taking this into consideration.

Referring to FIG. 9, the circuit part 110 may further include a fourth switching device S4 that connects the light-emitting device D and the storage capacitor Cs and is connected in parallel with the third switching device S3. The controller 120 may turn on the third switching device S3 when charging the light-emitting device D by connecting the storage capacitor Cs and the inductor L, and may turn on the fourth switching device S4 when charging the light-emitting device D without connecting the inductor L.

Referring to FIG. 10, the light emitting device D may include a plurality of light emitting devices D1, D2, D3, D4. The light emitting devices D may be connected to the light emitting device driving module 100 and increased or decreased according to the desired brightness. As the number of light emitting devices D increases, the size of the power required to drive the light emitting devices D may increase. Therefore, as the number of light emitting devices D increases, the size of the driving power must be increased.

The light emitting device driving module 100 according to the present embodiment can control the on operation time of the third switching device S3 to make the light emitting device D emit light without changing the existing design or changing the size of the driving power supply VDD even if the number of light emitting devices D changes. As the number of light emitting devices D increases, the size of the third voltage V3, which is a voltage required to drive the light emitting devices D, can increase. Therefore, it is necessary to increase the size of the first voltage V1 in accordance with the increasing third voltage V3. Since the first voltage V1 is formed by charging the light emitting device D using the energy charged in the storage capacitor Cs, the controller 120 can increase the size of the first voltage V1 by increasing the time during which the storage capacitor Cs and the light emitting device D are connected. The controller 120 can increase the time for turning on the third switching device S3 as the number of light-emitting devices increases. In addition, in the case of a light-emitting device driving module 100 in which an inductor L is connected between the third switching device S3 and the light-emitting device D, the controller 120 can boost the voltage by the inductor L and charge the light-emitting device D. Specifically, since the peak time for amplifying to the maximum voltage when resonance occurs through the inductor L and the storage capacitor Cs is calculated as $T = \pi\sqrt{LC}$, the time for turning on the third switching device S3 can be adjusted by taking this into consideration.

According to the present embodiments, since the energy remaining after being used for light emission in the light emitting device is stored in the capacitor instead of being discharged, and the energy stored in the capacitor is used as a bias voltage when light is emitted again, energy consumption can be reduced, which is advantageous in terms of efficient energy management. In addition, since the size of the energy charged in the capacitor can be adjusted using LC resonance, light emission can be driven at high speed even if the number of light emitting devices increases. In addition, even if the number of light emitting devices changes and the size of the bias voltage required for light emission changes, the bias voltage of the light emitting devices can be applied as much as necessary through switching time control. Therefore, there is no need to change the design of the light emitting device driving module every time the number of light emitting devices changes.

As described above, the light emitting device driving module according to an embodiment of the present disclosure has been described with reference to FIGS. 1 to 10. Hereinafter, the camera module according to an embodiment of the present disclosure will be described with reference to FIGS. 11 to 14. The detailed description of a camera module according to an embodiment of the present disclosure, a light-emitting device driving module according to an embodiment of the present disclosure, and names, terms, and functions thereof are based on the detailed description of each embodiment, and may be the same or different from each other.

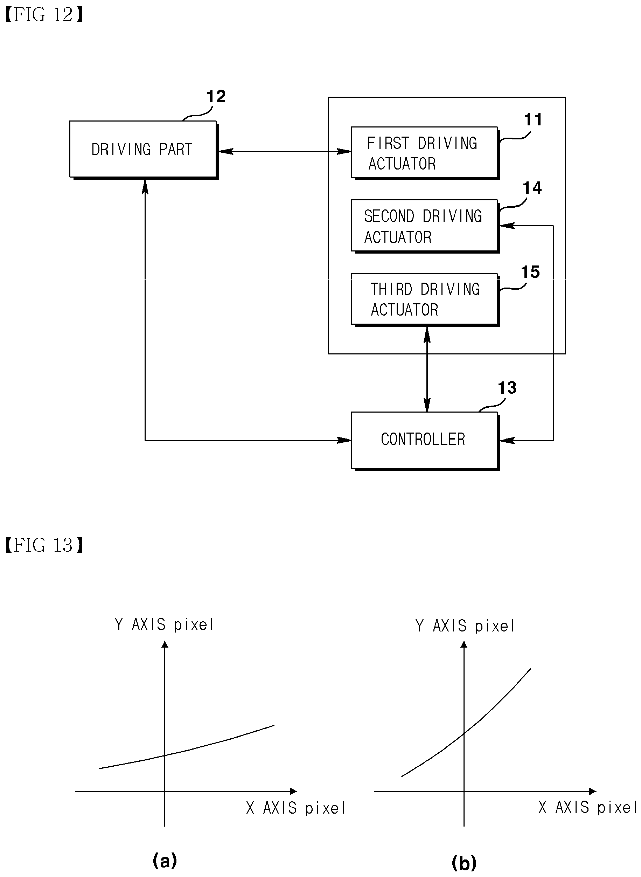

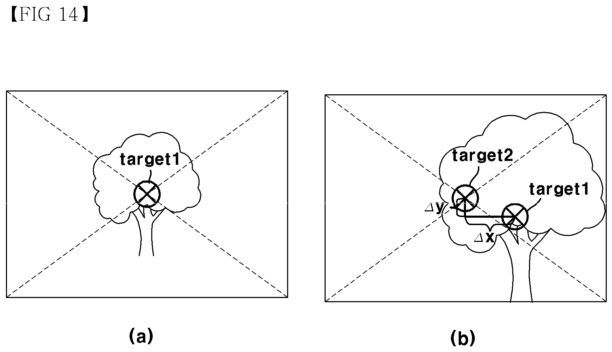

FIG. 11 is a block diagram illustrating a camera module according to the present embodiment, FIG. 12 is a block diagram illustrating a camera module according to another embodiment of the present disclosure, FIG. 13 is a sensitivity graph stored in the controller of the camera module according to the present embodiment, and FIG. 14 is a view for explaining the moving tilt compensation operation of the camera module according to the present embodiment.

During mass production of camera modules, autofocus characteristics of each mass-produced camera module may vary due to lens deviation, actuator dynamic characteristics deviation, actuator electrical characteristics deviation, and assembly deviation of actuators within the camera module. In the case of actuators that drive AF and zoom, a moving tilt phenomenon occurs in which the target moves when operated with a long stroke. In order to compensate for this, it is necessary to drive an OIS driving actuator that drives in a direction perpendicular to the optical axis.

However, since AF drive and zoom drive mean driving the lens or image sensor in the direction of the optical axis, and OIS driving means driving in the direction perpendicular to the optical axis, there is a problem in that it is not known how much of the moving tilt should be compensated for by OIS driving even if the moving tilt occurs due to AF drive and zoom drive.

The present disclosure is to solve such problems, and according to the present embodiment, the pixel movement amount of the image sensor according to the driving amount of the OIS driving actuator can be calibrated in advance, and the OIS driving signal can be generated through the pixel movement amount of the target movement on the image sensor when a moving tilt occurs. In other words, since the AF driving and zoom driving actuators and the OIS driving actuator have different dimensions, the moving tilt can be corrected through a method of calibrating both driving systems in advance based on the pixel movement amount of the image sensor.

A camera module according to the present embodiment may include an image sensor, a first driving actuator 11, a driving part 12, and a controller 13. A camera module according to another embodiment of the present disclosure may include an image sensor, a first driving actuator 11, a second driving actuator 14, a third driving actuator 15, a driving part 12, and a controller 13.

The first driving actuator 11 is an actuator for driving the OIS. The first driving actuator 11 may be placed on the image sensor. The OIS driving may mean driving the lens or the image sensor in a direction perpendicular to the optical axis. The OIS driving actuator may be referred to as a shake correction actuator.

The second driving actuator 14 is an actuator for zoom driving. Zoom driving may mean continuous zoom driving. Zoom driving may mean moving at least one of a plurality of lens groups included in the optical system in the optical axis direction.

The third driving actuator 15 is an actuator for AF driving. AF driving may mean fixed zoom driving. AF driving may mean driving a lens or image sensor in the direction of the optical axis for focus adjustment.

The first driving actuator 11 to the third driving actuator 15 may be referred to as a lens drive device when driving a lens. The first driving actuator 11 to the third driving actuator 15 may be referred to as a sensor drive device when driving an image sensor.

The driving part 12 can apply a driving signal to the first driving actuator 11. The driving part 12 can apply a driving signal to the first driving actuator 11 to the third driving actuator 15. The driving part 12 can apply a first driving signal to the first driving actuator 11. The driving part 12 can apply a second driving signal to the second driving actuator 14. The driving part 12 can apply a third driving signal to the third driving actuator 15. The driving part 12 can be in the form of a driver IC.

The controller 13 can generate a driving signal applied to the first driving actuator 11 to compensate for the moving tilt that occurs during at least one of the zoom driving and the AF driving. The controller 13 can generate the driving signal applied to the first driving actuator 11 through the amount of pixel movement on the image sensor due to the moving tilt.

The controller 13 may store the sensitivity, which is the pixel movement amount on the image sensor according to the driving amount of the first driving actuator 11. The controller 13 may generate a driving signal applied to the first driving actuator 11 using the pixel movement amount and the sensitivity. The sensitivity may be a 'relationship between the driving amount of the first driving actuator 11 and the pixel movement amount on the image sensor'. The sensitivity may be 'an expression of the driving amount of the first driving actuator 11 and the pixel movement amount on the image sensor in the form of a look-up table (LUT)'. The controller 13 may store the driving amount of the first driving actuator 11 according to the pixel movement amount on the image sensor. The driving amount of the first driving actuator 11 may mean the size of the driving current applied to the first driving actuator 11. The driving amount of the first driving actuator 11 may mean the size of the driving code applied to the first driving actuator 11. The driving amount of the first driving actuator 11 may mean the size of the signal applied to the first driving actuator 11 to move the lens or the image sensor in the x-axis direction or the y-axis direction perpendicular to the optical axis direction (z-axis).

When a moving tilt occurs, the sensitivity is calibrated in advance because it is not possible to determine how much the first driving actuator 11 must move to move to the original target on the image sensor. Afterwards, when the target movement on the image sensor occurs due to the moving tilt, the driving amount of the first driving actuator 11 can be calculated through the pixel movement amount on the image sensor.

The sensitivity may include a first sensitivity, which is a pixel movement amount on the image sensor according to a driving amount in a first-axis direction perpendicular to the optical axis direction of the first driving actuator 11. The sensitivity may include a second sensitivity, which is a pixel movement amount on the image sensor according to a driving amount in a second-axis direction perpendicular to the optical axis direction of the first driving actuator 11. Here, the first-axis direction and the second-axis direction may be perpendicular to each other. The first-axis direction may mean the x-axis direction, and the second-axis direction may mean the y-axis direction.

Referring to FIG. 13, the first sensitivity may have a first slope in a graph where the x-axis represents 'x-axis driving amount' and the y-axis represents 'x-axis pixels'. The second sensitivity may have a second slope in a graph where the x-axis represents 'y-axis driving amount' and the y-axis represents 'y-axis pixels'. The first slope and the second slope may have the same value. The first slope and the second slope may have different values. The first sensitivity and the second sensitivity may be calibrated in advance and stored. Although FIG. 13 illustrates that the 'driving amount of the first driving actuator 11' and the 'amount of pixels on the image sensor' have a linear relationship, it is not limited thereto, and it is obvious that it may vary according to the characteristics of the actuator arranged in the camera module.

Referring to Fig. 14(a), a target 1 can be positioned in the center area of the image sensor before AF driving or zoom driving operation. Referring to Fig. 14(b), when AF driving or zoom driving is performed, a moving tilt occurs, and target 1 moves $\Delta x$ in the x-axis direction and $\Delta y$ in the y-axis direction based on target 2, which is the center of the image sensor.

Therefore, the moving tilted target 1 must be position-corrected to the position of target 2 through the first driving actuator 11 driving the OIS. The controller 13 calculates $(\Delta x, \Delta y)$, which is a pixel movement amount on the image sensor according to the target movement, and can calculate the x-axis driving amount and the y-axis driving amount of the first driving actuator 11 through $(\Delta x, \Delta y)$ and the first and second sensitivities that have been calibrated in advance.

The controller 13 can store the amount of pixel movement on the image sensor due to the moving tilt that occurs when the zoom is driven. The controller 13 can store the amount of pixel movement on the image sensor due to the moving tilt that occurs when the AF is driven. The controller 13 can store the amount of pixel movement on the image sensor due to the moving tilt that occurs when the zoom is driven and the AF is driven at the same time.

The controller 13 can store the amount of pixel movement on the image sensor according to the second driving signal applied to the second driving actuator 14. The controller 13 can store the amount of pixel movement on the image sensor according to the third driving signal applied to the third driving actuator 15. The controller 13 can store the amount of pixel movement on the image sensor that occurs when the second driving signal is applied to the second driving actuator 14 and the third driving signal is applied to the third driving actuator 15 at the same time.

When the second driving actuator 14 for zoom driving and the third driving actuator 15 for AF driving perform stroke operations, the moving tilt that occurs due to the dynamic characteristic deviation of the actuator, the electrical characteristic deviation of the actuator, the assembly deviation of the actuator within the camera module, or the like may be constant. For example, when the second driving actuator 14 performs stroke operation by a length of A, the moving tilt in which the target moves by a length of B may always occur. Alternatively, when the third driving actuator 15 performs stroke operation by a length of C, the moving tilt in which the target moves by a length of D may always occur.

Therefore, if the amount of pixel movement on the image sensor due to the moving tilt that occurs when zooming is driven and the amount of pixel movement on the image sensor due to the moving tilt that occurs when AF is driven are calibrated in advance, the amount of driving of the first driving actuator 11 can be calculated more quickly without directly checking the amount of pixel movement on the image sensor.

The controller 13 can generate the first driving signal according to the second driving signal and the third driving signal. The controller 13 can pre-calibrate the relationship between the 'applied second driving signal, third driving signal - pixel movement amount on the image sensor' and the 'pixel movement amount on the image sensor - driving amount of the first driving signal', and then the controller 13 can check at least one signal among the second driving signal and the third driving signal and directly generate the first driving signal.

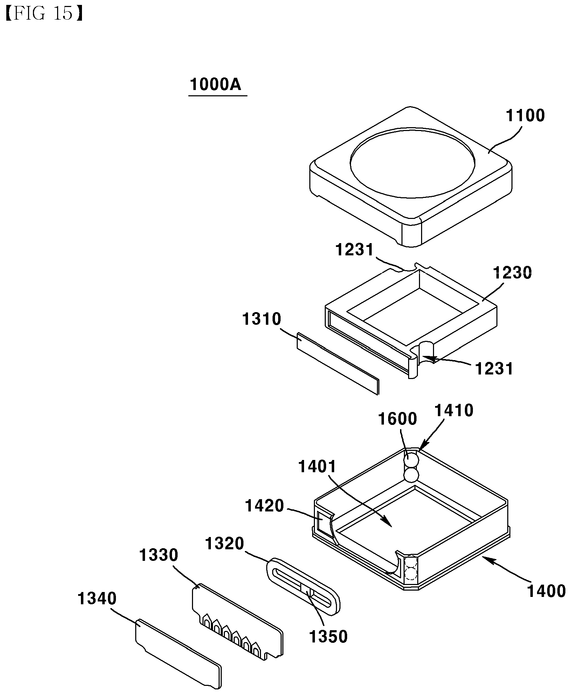

As described above, the camera module according to the embodiment of the present disclosure has been described with reference to FIGS. 11 to 14. Hereinafter, the camera module according to the embodiment of the present disclosure and the control operation of the camera module will be described with reference to FIGS. 15 to 22. The camera module and the control operation, name, terminology, and function of the camera module according to the embodiment of the present disclosure are based on the detailed description of each embodiment and may be the same or different from each other.

The lens driving device 1000A illustrated in Fig. 15 may be a ball-type lens driving device. The lens driving device may be referred to as a lens driving actuator.

Referring to FIG. 15, the lens driving device 1000A may include a housing 1400, a bobbin 1230 disposed within the housing 1400 and coupled with a lens module, a coil 1320 disposed in the housing 1400 and a magnet 1310 disposed in the bobbin 1230, a ball 1600 disposed between the housing 1400 and the bobbin 1230, and a yoke 1340 disposed in the housing 1400. The ball 1600 may also be expressed as a "ball member" or a "ball bearing".

The lens driving device 1000A may include a cover member 1100 coupled with the housing 1400 to surround an outer surface of the housing 1400. The lens driving device 1000A may include a position sensor 1350 disposed in the housing 1400. In addition, the lens driving device 1000A may include a circuit board 1330 disposed in the housing 1400, and the position sensor 1350 may be mounted on the circuit board 1330 and electrically connected to the circuit board 1330.

The bobbin 1230 may have an opening for being coupled with a lens module, and the opening of the bobbin 1230 may be in the form of a through-hole penetrating the bobbin in the direction of the optical axis. The magnet 1310 may be arranged on the outer surface of the bobbin 1230. A groove may be formed on the outer surface of the bobbin 1230 for arranging the magnet 1310.

The coil 1320 may be placed on one side 1420 of the housing 1400 opposite the magnet 1310. For example, a groove may be formed on one side of the housing 1400 for placing the magnet 1310. In another embodiment, the magnet may be placed on the housing and the coil may be placed on the bobbin.

The housing 1400 may have an opening 1401 corresponding to the lens module 400, and the opening 1401 of the housing 140 may be in the form of a through-hole penetrating the housing 1400 in the direction of the optical axis.

The coil 1320 can be electrically connected to the circuit board 1330.

The ball 1600 can support the bobbin 1230 from moving relative to the housing 1400. At least a part of the ball 1600 can contact at least a part of the housing 1400 and at least a part of the bobbin 1230, thereby reducing friction between the housing 1400 and the bobbin 1230.

The yoke 1340 may be placed on one side of the housing 1400 and may face the magnet 1310 in a direction perpendicular to the optical axis. For example, the yoke 1340 may be placed on the outside of the circuit board 1330, and a coil 1320 may be placed between the yoke 1340 and the magnet 1310.

The yoke 1340 may be made of a material capable of generating an attractive force between the yoke and the magnet 1310, for example, a magnet or a metal, and accordingly, an attractive force may be applied between the yoke 1340 and the magnet 1310 in a direction perpendicular to the optical axis. By this attractive force, the ball 1600 may be maintained in contact with the bobbin 1230 and the housing 1400.

The housing 1400 may be formed with a first accommodation groove 1410 for receiving at least a part of the ball 1600 or for placing at least a part of the ball 1600. The bobbin 1230 may be formed with a second accommodation groove 1231 for accommodating at least another part of the ball 1600 or for placing at least another part of the ball 1600.

The first accommodation groove 1410 may be formed on the inner side or inner surface of at least one corner of the housing 1400, and the second accommodation groove 1231 may be formed on the outer side or outer surface of at least one corner of the bobbin 1230. The first accommodation groove 1410 and the second accommodation groove 1231 may face or oppose each other, and the ball 1600 may be arranged between the first accommodation groove 1410 and the second accommodation groove 1231 and may come into contact with each of the first accommodation groove 1410 and the second accommodation groove 1231. The number of balls 1600 arranged between the first accommodation groove 1410 and the second accommodation groove 1231 may be 1 or more.

In FIG. 15, a first accommodation groove may be formed at each of two corners of the housing 1400 that are positioned facing or opposite to each other, and a second accommodation groove may be formed at each of two corners of the bobbin 1230 that correspond to the two corners of the housing 140.

In another embodiment, a first accommodation groove may be formed at each of the four corners of the housing 1400, and a second accommodation groove may be formed at each of the four corners of the bobbin 1230 corresponding to the four corners of the housing 1400.

In another embodiment, a first accommodation groove may be formed at each of two corners of the housing 1400 adjacent to the side 1420 of the housing 1400 in which the coil 1320 and/or the circuit board 1330 are placed.

Additionally, a second accommodation groove may be formed at each of two corners of the bobbin 1230 corresponding to two corners of the two housings 1400 adjacent to the side 1420 of the housing 1400.

In another embodiment, a first accommodation groove may be formed at each of two corners adjacent to a side positioned on the opposite side 1420 of the housing 1400. A second accommodation groove may be formed at each of two corners of the bobbin 1230 corresponding to the two corners adjacent to a side positioned on the opposite side 1420 of the housing 1400.

As illustrated in FIG. 15, the housing 1400 may be implemented as a single body, but is not limited thereto. In another embodiment, the housing 1400 may include a housing and a base coupled to the housing. In this case, the base may have an opening that is the same as or similar to the opening 1401 of the housing 1400.

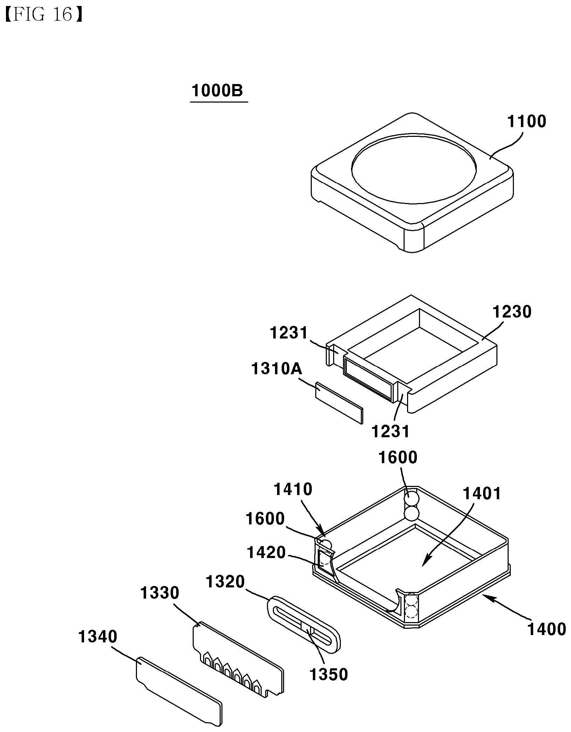

Fig. 16 may be a lens driving device 1000B which is a modified embodiment of Fig. 15.

In FIG. 16, the ball 1600 can be placed between two corners adjacent to the side 1420 of the housing 1400 where the coil 1320 and/or the circuit board 1330 are placed and the corresponding outer surface of the bobbin 1230.

For example, in FIG. 16, the first accommodation groove 1410 may be formed at each of two corners of the housing 1400 adjacent to the side 1420 of the housing 1400 where the coil 1320 and/or the circuit board 1330 are placed, and the second accommodation groove 1231 may be formed at corners of the bobbin 1230 corresponding to the two corners of the housing 1400.

The magnet 1310A may be placed between balls 1600 accommodated in second accommodation grooves 1231 formed at two corners of the bobbin 1230. For example, the magnet 1310A may be placed between two second accommodation grooves 1231 formed at two corners of the bobbin 1230.

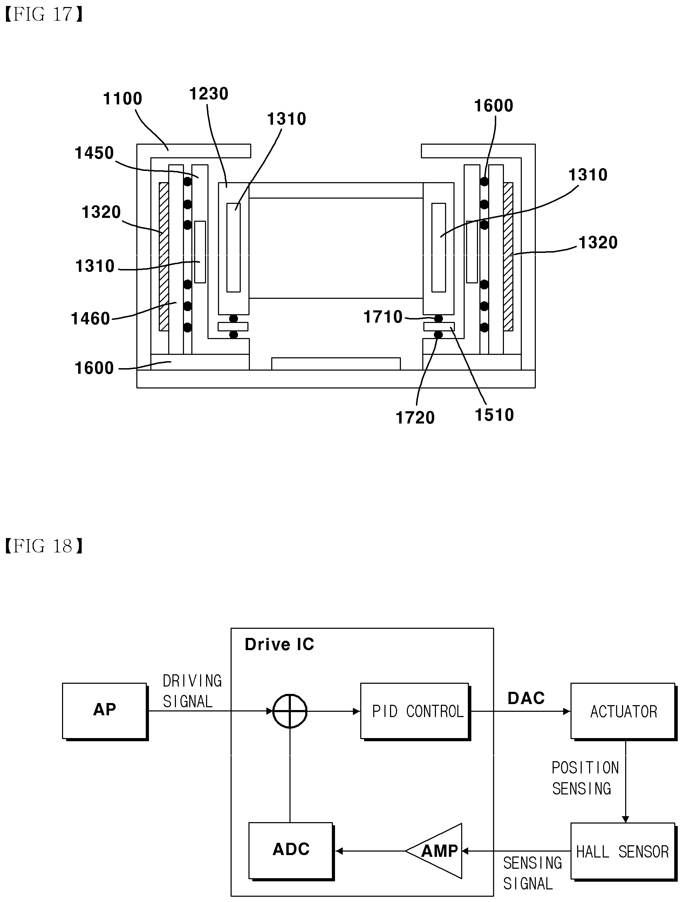

Fig. 17 may be a lens driving device 100C that is a modified embodiment of Fig. 15.

The lens driving device illustrated in FIGS. 15 and 16 is a lens driving device that drives a bobbin 1230 or a lens module disposed within the bobbin 1230 in the optical axis direction. The lens driving device illustrated in FIG. 17 is a lens driving device that drives a bobbin 1230 or a lens module disposed within the bobbin 1230 in the optical axis direction and in a direction perpendicular to the optical axis.

In Fig. 17, the bobbin 1230 may be placed in the first housing 1450, and the first housing 1450 may be placed in the second housing 1460. A ball 1600 for AF driving may be placed between the first housing 1450 and the second housing 1460. The ball 1600 may support the first housing 1450 to move relative to the second housing 1460. A coil 1320 may be placed on the outside of the second housing 1460.

A moving member 1510 may be placed between the lower surface of the bobbin 1230 and the first housing 1450. A first ball 1710 may be placed between the lower surface of the bobbin 1230 and the upper surface of the moving member 1510, and a second ball 1720 may be placed between the lower surface of the moving member 1510 and the first housing 1450. The first ball 1710 and the second ball 1720 may support the bobbin 1230 to move relative to the first housing 1450.

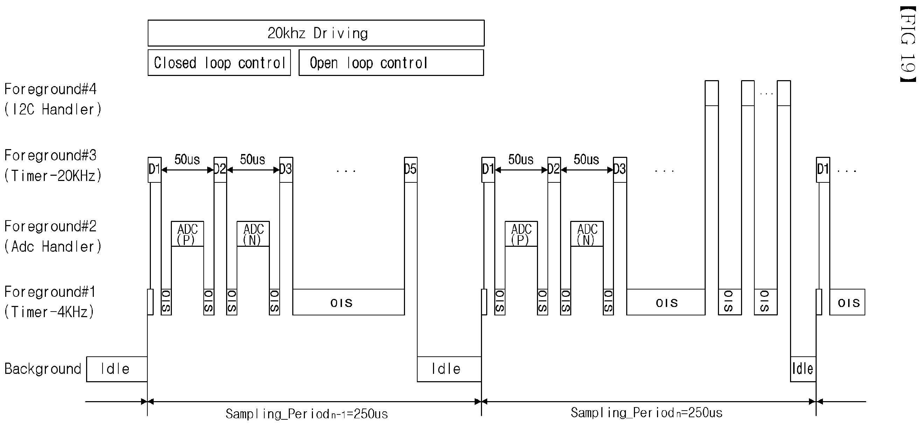

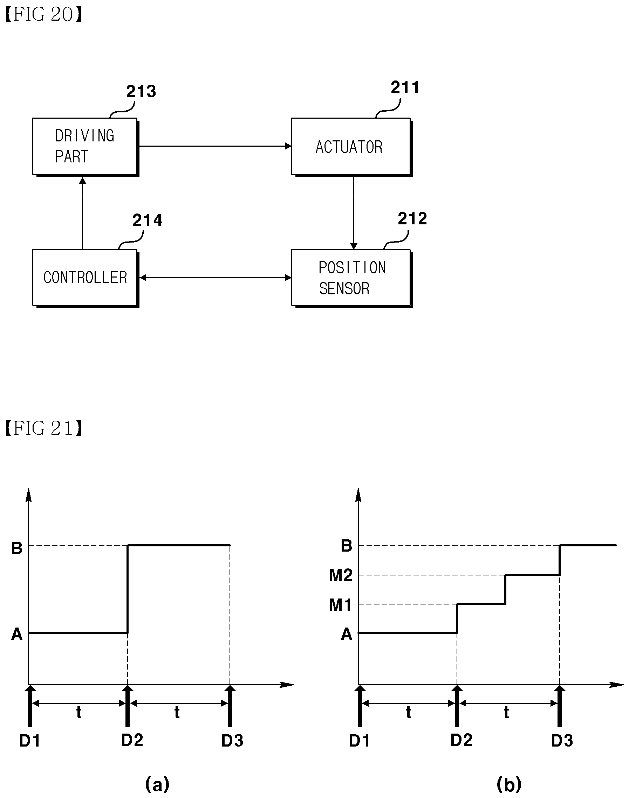

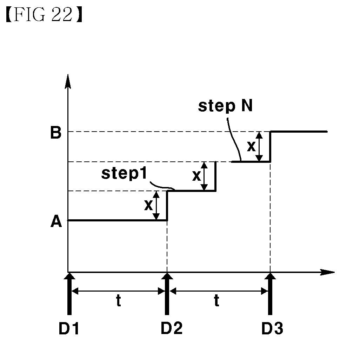

FIGS. 18 and 19 are drawings for explaining closed-loop control of a camera module, FIG. 20 is a block diagram of a camera module according to an embodiment of the present disclosure, and FIGS. 21 and 22 are drawings for explaining a control operation of a camera module according to an embodiment of the present disclosure.

Referring to FIGS. 15 to 17, the circuit board 1330 may correspond to a Drive IC, and the position sensor 1350 may correspond to a Hall sensor. The position sensor 1350 may be placed on the circuit board 1330 and electrically connected to the Drive IC of the circuit board 1330. The Drive IC of the circuit board 1330 may apply current to the coil 1320.

The position sensor 1350 can sense the driving position of the bobbin 1230. For example, the position sensor 1350 can sense the position of the bobbin 1230 in the optical axis direction during AF driving in which the bobbin 1230 moves in the optical axis direction. In addition, for example, the position sensor 1350 can sense the position of the bobbin 1230 in the direction perpendicular to the optical axis direction during OIS driving in which the bobbin 1230 moves in the direction perpendicular to the optical axis direction. In the case of sensing OIS driving, the position sensor 1350 may be disposed on a circuit board on the lower surface of the bobbin 1230.

Referring to FIGS. 18 and 19, when a control operation is performed to apply a driving signal to an actuator that drives a lens or an image sensor, a sensing signal sensed by a Hall sensor can be fed back with respect to a driving signal generated by an AP.

More specifically, in Foreground #1 of Fig. 19, the Driver IC can perform a DAC (Digital-Analog Converter) on the actuator. When a driving signal is applied to the actuator and the actuator is driven, the Hall sensor in Foreground #2 can sense the position of the actuator. The Hall sensor can sense the position of the actuator through one sensing cycle consisting of positive response sensing and negative response sensing. The Hall sensor can transmit a sensing signal that senses the position of the actuator to the AMP (Amplifier) of the Driver IC. The position sensing signal can be amplified through the AMP and converted into a digital signal by an ADC (Analog-Digital Converter).

Afterwards, the position signal sensed by the Hall sensor can be fed back to the driving signal applied to the Driver IC from the AP (Application Processor). The signal fed back from Foreground #3 can be controlled by PID (Proportional Integral Derivative) and converted into a current applied to the coil by the DAC (Digital-Analog Converter).

The camera module according to the present embodiment may include an actuator 211, a position sensor 212, a driving part 213, and a controller 214.

The actuator 211 can drive at least one of a lens or an image sensor. The actuator 211 can drive the lens or the image sensor in at least one of the optical axis direction and the direction perpendicular to the optical axis. The actuator 211 can be an actuator for AF driving. The actuator 211 can be an actuator for OIS driving. The actuator 211 can be a spring type driving actuator. The actuator 211 can be a ball type driving actuator. The actuator 211 includes a housing and a bobbin arranged in the housing, and can drive the bobbin.

The position sensor 212 can sense the position of the actuator 211. The position sensor 212 can sense the position of the bobbin. The position sensor 212 can be a Hall sensor. The position sensor 212 can sense the position of the actuator 211 for AF feedback driving and OIS feedback driving. The position sensor 212 can correspond to, face, or overlap with a sensing magnet arranged in the actuator 211. The position sensor 212 can output a sensing signal according to a result of detecting the magnetic field strength of the sensing magnet according to the movement of the bobbin to the controller 214. The position sensor 212 can output a sensing signal according to a result of detecting the magnetic field strength of the sensing magnet according to the movement of the bobbin to the driving part 213. A position sensor 212 may be placed on an actuator 211, and a sensing magnet may be placed on a housing in which the actuator 211 is placed.

The driving part 213 can drive the actuator 211 based on the driving signal. The driving part 213 can be a driver IC. The driving part 213 can be a driver IC including a position sensor 212. The driving part 213 can receive a position sensing signal sensed from the position sensor 212. The driving part 213 can feed back the position sensing signal sensed by the position sensor 212 to the driving signal generated by the controller 214 and apply it to the actuator 211. The driving part 213 can apply the driving signal generated by the controller 214 to the actuator 211, and at this time, the driving signal can be a signal in which the sensing signal sensed by the position sensor 212 is reflected as a feedback signal.

As described above, the driving part 213 may perform an AMP (Amplifier) that amplifies a sensing signal sensed by the position sensor 212, an ADC (Analog-Digital Converter) that converts an analog signal into a digital signal, a DAC (Digital-Analog Converter) that converts a digital signal into an analog signal, and PID control. The driving part 213 may have the same configuration as the controller 214 described below, or the driving part 213 may have a separate configuration from the controller 214.

The controller 214 can generate a driving signal through position information sensed from the position sensor 212. After the first driving signal is applied according to the first sensing period, the controller 214 can gradually increase or decrease the level of the second driving signal when the second driving signal is applied according to the second sensing period. Here, the sensing period may mean an operation period including an operation of generating a driving signal for position control and applying the driving signal to the actuator 211 after positive response sensing and negative response sensing are performed by the position sensor 212. The first sensing period and the second sensing period may have the same time interval. The second sensing period may be temporally continuous with respect to the first sensing period. During the first sensing period, the first driving signal applied to the coil does not change, and during the second sensing period, the driving signal applied to the coil may change at least twice. The levels of at least two driving signals applied to the coil during the second sensing cycle may be different.

Referring to FIG. 21 (a), in the driving control of the existing actuator, the level of the driving current is applied as A according to the first driving signal D1, and when the second driving signal D2 is applied, the level of the driving current immediately increases from A to B. Thereafter, the level of the driving current is maintained as B until the third driving signal D3 according to the sensing cycle is applied. According to the existing actuator driving control method, since the amount of change in the driving current level is large, driving noise is generated due to ball movement in the ball-type driving actuator. Therefore, in order to reduce the driving noise of the actuator, the camera module according to the present embodiment drives the actuator by slightly increasing and decreasing the level of the driving current.

Specifically, referring to FIG. 21(b), the controller 214 according to the present embodiment can gradually increase the level of the driving current of the second driving signal when the second driving signal D2 is applied while the level of the driving current is A according to the first driving signal D1. The controller 214 can gradually increase the level of the driving current until the third driving signal D3 is applied in order to apply the level B of the driving current according to the second driving signal D2.

The controller 214 can gradually increase the driving current levels M1 and M2, which are greater than A and less than B, in order to apply the driving current level B according to the second driving signal D2 when the level of the driving current is applied as A. Thereafter, when the third driving signal D3 is applied when the level of the driving current according to the second driving signal D2 is applied as B, the controller 214 can gradually increase and decrease the driving current level according to the third driving signal D3.

Since the level of the driving current is applied to the actuator 211 as A according to the first driving signal D1, the size of the first driving signal D1 can be considered as A. Since the level of the driving current is applied to the actuator 211 as B according to the second driving signal D2, the size of the second driving signal D2 can be considered as B. The level of the driving current can be replaced with a driving code applied to the actuator 211. The driving code can mean that the level of the driving current is coded. When the size of the level of the driving current increases, the driving amount of the actuator 211 can increase. When the size of the driving code increases, the driving amount of the actuator 211 can increase.

The number of steps of the level of the second driving signal applied during the second sensing period may vary according to the difference between the level A of the first driving signal and the level B of the second driving signal. As the difference between the level A of the first driving signal and the level B of the second driving signal increases, the number of steps applied from the first driving signal to the second driving signal during the second sensing period may increase. As the level A of the first driving signal and the level B of the second driving signal decrease, the number of steps applied from the first driving signal to the second driving signal during the second sensing period may decrease.

Referring to Fig. 22, the time t from when the first driving signal D1 is applied until the second driving signal D2 is applied and the time t from when the second driving signal D2 is applied until the third driving signal D3 is applied may be the same. The level difference of the number of steps N may vary according to the absolute value of the difference between the level A of the signal according to the first driving signal D1 and the level B of the signal according to the second driving signal D2.

For example, the controller 214 can increase or decrease the driving signal in N steps when the absolute value of the level difference between the first driving signal and the second driving signal is the first value. The controller 214 can increase or decrease the driving signal in M steps when the absolute value of the level difference between the first driving signal and the second driving signal is the second value. Here, when the first value is greater than the second value, N can be greater than M.

According to the difference between the level A of the first driving signal and the level B of the second driving signal, the signal level difference of the step applied from the first driving signal to the second driving signal may vary. As the level A of the first driving signal and the level B of the second driving signal increase, the level difference of the signal of each step applied from the first driving signal to the second driving signal may increase. As the size A of the first driving signal and the level B of the second driving signal decrease, the level difference of the signal of each step applied from the first driving signal to the second driving signal may decrease.

Referring to FIG. 22, the level difference X of the signal that increases and decreases step by step may vary according to the absolute value of the difference between the level A of the signal according to the first driving signal D1 and the level B of the signal according to the second driving signal D2.

For example, when the absolute value of the level difference between the first driving signal and the second driving signal is the first value, the controller 214 can increase or decrease the driving signal to a step having a level difference of X. When the absolute value of the level difference between the first driving signal and the second driving signal is the second value, the controller 214 can increase or decrease the driving signal to a step having a level difference of Y. Here, when the first value is greater than the second value, X can be greater than Y.

The controller 214 can control the number of steps or the level of the signal that increases and decreases by step by considering the difference in the current level according to the driving signal. The controller 214 can control the number of steps that are finely controlled or the level of the signal that increases and decreases by step whenever the driving signal according to the sensing cycle is applied. Through this, the actuator operation for noise reduction can be optimized according to the difference in the level of the driving signal applied to the actuator.

The features, structures, effects, or the like described in the embodiments above are included in at least one embodiment, and are not necessarily limited to just one embodiment. Furthermore, the features, structures, effects, or the like exemplified in each embodiment can be combined or modified and implemented in other embodiments by a person having ordinary knowledge in the field to which the embodiments belong. Therefore, the contents related to such combinations and modifications should be interpreted as being included in the scope of the embodiments.

**Claims**

1. A light-emitting device driving module comprising:

   a first switching device connecting a light-emitting device and a driving power source;
   a second switching device connecting the light-emitting device and a ground;
   a third switching device connecting the light-emitting device and a storage capacitor; and
   a controller controlling the operation of the first to third switching devices,
   wherein the light-emitting device is charged by the driving power source and the storage capacitor, and discharged by the ground and the storage capacitor.

2. The light-emitting device driving module of claim 1, further comprising:
   an inductor arranged between the light-emitting device and the third switching device.

3. The light-emitting device driving module of claim 2, further comprising:
   a fourth switching device connecting the light-emitting device and the storage capacitor and connected in parallel with the third switching device.

**4.** The light-emitting device driving module of claim 1,

wherein the controller, when the light-emitting device is operated for emitting light, turns the third switching device on and off before the first switching device is turned on, and turns the third switching device on and off after the first switching device is turned off.

**5.** The light-emitting device driving module of claim 1,

wherein the light-emitting device operates to emit light if a second voltage or higher is applied thereto, and wherein the controller turns on the third switching device until the first voltage is applied to the light-emitting device during the initial operation for emitting light, and wherein the second voltage is greater than the first voltage.

**6.** The light-emitting device driving module of claim 4, wherein the controller turns the first switching device off to extinguish the light-emitting device and then turns the third switching device on.

**7.** The light-emitting device driving module of claim 1,

wherein the controller, during the initial operation for emitting light of the light-emitting device, turns the third switching device on for a first time, turns the first switching device on for a second time after the first time, turns the third switching device on for a third time after the second time, and turns the second switching device on after the third time.

**8.** The light-emitting device driving module of claim 7,

wherein the light-emitting device includes a plurality of light-emitting devices, wherein the controller increases the first time for turning the third switching device on as the number of the plurality of light-emitting devices increases.

**9.** The light-emitting device driving module of claim 1,

wherein the light-emitting device includes a parasitic capacitor, and wherein the capacity of the storage capacitor is 10 times or more the capacity of the parasitic capacitor.

**10.** A light-emitting device driving module comprising:

a first switching device connecting a light-emitting device and a driving power source;

a second switching device connecting the light-emitting device and a ground; a third switching device connecting the light-emitting device and a storage capacitor; and a controller controlling the operation of the first to third switching devices, wherein the controller turns the third switching device on before turning the first switching device on to charge the energy of the storage capacitor to the light-emitting device.

【FIG 1】

VDD

S1

S2

D

【FIG 2】

【FIG 3】

**100**

**110**

CITCUIT PART

**1**

LIGHT-EMITTING
DEVICE

**120**

CONTROLLER

【FIG 4】

【FIG 5】

【FIG 6】

【FIG 7】

【FIG 8】

Peak time $\tau = \pi \sqrt{LC}$

【FIG 9】

【FIG 10】

【FIG 11】

【FIG 12】

【FIG 13】

(a)                                        (b)

【FIG 14】

(a)

(b)

【FIG 15】

1000A

【FIG 16】

1000B

1100

1230

1231

1310A

1231

1600

1410

1600

1420

1330

1320

1340

1350

1401

1400

【FIG 17】

【FIG 18】

[FIG 19]

[FIG 19]

【FIG 20】

【FIG 21】

(a)                                                    (b)

【FIG 22】

## INTERNATIONAL SEARCH REPORT

| International application No. |
|---|
| **PCT/KR2023/020592** |

### A. CLASSIFICATION OF SUBJECT MATTER

**H04N 23/68**(2023.01)i; **G03B 5/00**(2006.01)i; **H04N 23/54**(2023.01)i; **G03B 3/10**(2006.01)i; **G03B 13/36**(2006.01)i

According to International Patent Classification (IPC) or to both national classification and IPC

### B. FIELDS SEARCHED

Minimum documentation searched (classification system followed by classification symbols)

H04N 23/68(2023.01); G09G 3/20(2006.01); G09G 3/22(2006.01); G09G 3/30(2006.01); G09G 3/32(2006.01); H02M 3/335(2006.01); H05B 37/02(2006.01); H05B 41/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 발광소자(light emitting element), 캐패시터(capacitor), 그라운드(ground), 스위치(switch), 남은 전류(remaining current), 저장(storing)

### C. DOCUMENTS CONSIDERED TO BE RELEVANT

| Category* | Citation of document, with indication, where appropriate, of the relevant passages | Relevant to claim No. |
|---|---|---|
| X | US 10797698 B1 (WAYMO LLC) 06 October 2020 (2020-10-06)<br>See column 3, line 51 - column 4, line 15 and column 6, lines 4-7; and claims 1 and 9. | 1-2 |
| Y | | 9 |
| A | | 3-8,10 |
| Y | JP 2006-146158 A (SAMSUNG SDI CO., LTD.) 08 June 2006 (2006-06-08)<br>See claim 14. | 9 |
| A | WO 2011-058428 A1 (IGNIS INNOVATION INC.) 19 May 2011 (2011-05-19)<br>See paragraphs [0007], [0017] and [0019]. | 1-10 |
| A | JP 5645257 B2 (PANASONIC INTELLECTUAL PROPERTY MANAGEMENT CO., LTD.) 24 December 2014 (2014-12-24)<br>See paragraphs [0014]-[0019]. | 1-10 |

☑ Further documents are listed in the continuation of Box C.　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **21 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2"></td><td>International application No.</td></tr>
<tr><td colspan="2"></td><td>**PCT/KR2023/020592**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | US 9614452 B2 (MICROSEMI CORPORATION) 04 April 2017 (2017-04-04)<br>See column 4, lines 16-43. | 1-10 |

Form PCT/ISA/210 (second sheet) (July 2022)

EP 4 642 043 A1

## INTERNATIONAL SEARCH REPORT
### Information on patent family members

International application No.

**PCT/KR2023/020592**

| Patent document cited in search report | | | Publication date (day/month/year) | Patent family member(s) | | | Publication date (day/month/year) |
|---|---|---|---|---|---|---|---|
| US | 10797698 | B1 | 06 October 2020 | US | 2021-0167778 | A1 | 03 June 2021 |
| | | | | WO | 2021-108786 | A1 | 03 June 2021 |
| JP | 2006-146158 | A | 08 June 2006 | CN | 100776796 | A | 24 May 2006 |
| | | | | EP | 1659562 | A1 | 24 May 2006 |
| | | | | KR | 10-2006-0053754 | A | 22 May 2006 |
| | | | | US | 2006-0125738 | A1 | 15 June 2006 |
| WO | 2011-058428 | A1 | 19 May 2011 | CN | 102656621 | A | 05 September 2012 |
| | | | | EP | 2499633 | A1 | 19 September 2012 |
| | | | | JP | 2013-511061 | A | 28 March 2013 |
| | | | | US | 2011-0109299 | A1 | 12 May 2011 |
| JP | 5645257 | B2 | 24 December 2014 | JP | 2012-109141 | A | 07 June 2012 |
| US | 9614452 | B2 | 04 April 2017 | US | 2016-0205736 | A1 | 14 July 2016 |

Form PCT/ISA/210 (patent family annex) (July 2022)